(19) Europäisches Patentamt / European Patent Office / Office européen des brevets

(11) **EP 1 769 906 B1**

(12) **EUROPÄISCHE PATENTSCHRIFT**

(45) Veröffentlichungstag und Bekanntmachung des Hinweises auf die Patenterteilung:
**25.06.2008 Patentblatt 2008/26**

(51) Int Cl.:
*B32B 15/01* (2006.01)      *C23C 26/02* (2006.01)
*B22F 7/00* (2006.01)       *B22F 7/04* (2006.01)

(21) Anmeldenummer: **06017739.1**

(22) Anmeldetag: **25.08.2006**

(54) **Verbundbauteil mit strukturiertem Wolframteil**

Compound part with structured tungsten part

Pièce composite avec un part structuré fait de wolfram

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.08.2005 AT 5862005**

(43) Veröffentlichungstag der Anmeldung:
**04.04.2007 Patentblatt 2007/14**

(73) Patentinhaber: **PLANSEE SE**
**6600 Reutte (AT)**

(72) Erfinder:
- **Schedler, Bertram**
  **6600 Reutte (AT)**
- **Huber, Thomas**
  **6600 Breitenwang (AT)**
- **Friedrich, Thomas**
  **87642 Halblech (DE)**
- **Scheiber, Karlheinz**
  **6600 Breitenwang (AT)**
- **Schedle, Dietmar**
  **6600 Reutte (AT)**
- **Zabernig, Anton, Dr.-Ing.**
  **6600 Reutte (AT)**
- **Friedle, Hans-Dieter**
  **6651 Häselgehr (AT)**
- **Mair, Sandra**
  **6600 Reutte (AT)**
- **Wörle, Nadine**
  **6600 Musau (AT)**
- **Tabernig, Bernhard**
  **6600 Reutte (AT)**

(56) Entgegenhaltungen:
**AT-U1- 5 972        AT-U1- 6 636**

- **BARABASH V R ET AL: "Thermocyclic tests of the divertor plate mock-ups for the ITER reactor" FUSION ENGINEERING AND DESIGN NETHERLANDS, Bd. 18, Dezember 1991 (1991-12), Seiten 151-156, XP002417741 ISSN: 0920-3796**

**Beschreibung**

Die Erfindung betrifft ein Verfahren zur Herstellung eines Verbundbauteils, wobei ein Teil aus Wolfram oder einer Wolframlegierung mit einem W-Gehalt > 90 Gew.% mit einem Teil aus Kupfer oder einer Kupferlegierung mit einer Wärmeleitfähigkeit > 250 W/mK durch einen Fügeprozess stoffschlüssig verbunden wird.

Eine besondere Schwierigkeit bei der Herstellung von Wolfram-Kupfer Verbundbauteilen durch stoffschlüssiges Verbinden liegt darin, dass Wolfram und Kupfer ein sehr unterschiedliches Wärmeausdehnungsverhalten aufweisen. So liegt der Wärmeausdehnungskoeffizient bei Raumtemperatur von Wolfram bei

$$4{,}5 \times 10^{-6}\ K^{-1},\ \text{der von Kupfer bei } 16{,}6 \times 10^{-6}\ K^{-1}.$$

Für das Verbinden von Wolfram und Kupfer sind Technologien, wie beispielsweise Löten, Hintergießen und Diffusionsschweißen beschrieben. Diese Prozesse werden üblicherweise bei Temperaturen im Bereich 700 bis 1.300°C durchgeführt.

Beim Abkühlen kommt es aufgrund des unterschiedlichen Wärmeausdehnungskoeffizienten von Wolfram und Kupfer zu einem Spannungseinbau im Bereich der Fügezone. Spannungen können jedoch auch beim Einsatz der Verbundbauteile induziert werden, da diese oft einer zyklischen Wärmebelastung ausgesetzt sind.

Ein wichtiger Einsatzbereich derartiger Verbundbauteile sind Erste-Wand-Komponenten von Fusionsreaktoren. Für den stationären Betrieb von Fusionsreaktoren werden im Bereich der Oberfläche von Erste-Wand-Komponenten Leistungsflüsse von bis zu 10 MW/m$^2$ erwartet. Im Falle von Plasma-Zusammenbrüchen können innerhalb von wenigen Millisekunden an exponierten Stellen ca. 20 GJ freigesetzt werden. Die Entwicklung von Erste-Wand-Komponenten, speziell für die Bereiche höchster Energiedichten, wie beispielsweise den Divertor-, Baffel- und Limiterbereich, stellt ein Schlüsselelement bei der technologischen Umsetzung der Fusionsforschung dar.

Die Werkstoffanforderungen für Erste-Wand-Komponenten sind vielfältig und zum Teil gegensätzlich. Neben physikalischen und mechanischen Eigenschaften, wie hohe Wärmeleitfähigkeit, hoher Schmelzpunkt, niedriger Dampfdruck, gute Thermoschockbeständigkeit und Bearbeitbarkeit, kommen noch für die Kernfusion spezifische Anforderungen, wie geringe Aktivierung und Transmutation unter hohem Neutronenfluss, niedrige, permanente Tritiumspeicherung, geringe Erosion durch Plasmaionen und Neutralteilchen, geringe Sputterrate und Erosion durch örtliche Effekte wie Lichtbogen und Hotspots sowie geringe Abkühlung des Kernplasmas durch charakteristische Strahlung. Wolfram ist insbesondere für die Bereiche der ersten Wand sehr gut geeignet, wo relativ niedrige Plasmatemperaturen und hohe Partikeldichten vorherrschen. Wolfram hat sehr gute thermische Eigenschaften, wie z.B. eine hohe Wärmeleitfähigkeit (165 W/mK bei Raumtemperatur). Weiters prädestinieren sein hoher Schmelzpunkt, geringes Tritiumaufnahmevermögen, niedrige Vakuumausgasrate und niedrige Sputterrate Wolfram für Erste-Wand-Komponenten. Um eine wirkungsvolle Wärmeabfuhr speziell in den Bereichen höchster Energiedichten zu erreichen, werden Wolfram-Kupfer Verbundbauteile eingesetzt. Die hohen Energiedichten und die zyklische Belastung derartiger Verbundbauteile können zu Rissen bzw. zu Ablösungen im Interface zwischen Wolfram und Kupfer führen. Durch die dadurch behinderte Wärmeableitung besteht die Gefahr, dass der Verbundbauteil aufschmilzt.

Es wurden umfangreiche Entwicklungsprogramme initiiert und teilweise bereits durchgeführt, mit dem Ziel ein Verbundbauteil, bestehend aus einem dem Plasma zugewandten Wolframbereich und einer damit formschlüssig verbundenen, aktiv-gekühlten Wärmesenke aus Kupfer mit geringen Verbundspannungen in der Fügezone zu realisieren.

So wurde eine deutliche Verringerung der Spannungen dadurch erreicht, dass der Wolframbereich in Form von einzelnen kleinen Quadern oder Rundstäben mit einer Seitenlänge bzw. einem Durchmesser von einigen Millimetern ausgeführt wird, wobei diese Quader bzw. Rundstäbe in einem Kupferbereich eingefügt sind. Diese Segmentierung reduziert die thermischen Spannungen, die aus dem Fügeprozess bzw. dem zyklierenden Betrieb resultieren. Jedoch auch bei dieser Ausführung liegt ein hohes Gefahrenpotential in der Ausbildung von thermischen Ermüdungsrissen im Interface Wolfram-Kupfer.

Es gibt zahlreiche Versuche, Spannungen im Interface durch einen gradiert ausgeführten Übergang zwischen Wolfram und Kupfer zu reduzieren.

So beschreibt die US 5 126 106 eine Methode zur Herstellung eines Wolfram-Kupfer-FGM's. Dabei wird ein Wolframteil mit gradiert aufgebauter Porosität, beispielsweise durch Plasmaspritzen hergestellt, mit Kupfer infiltriert.

Auch in der US 5 988 488 ist ein Herstellungsverfahren dargestellt, wo mittels Plasmaspritzen ein gradierter Übergang zwischen Wolfram und Kupfer erreicht werden soll. Unterschiedlich zu der US 5 126 106 wird dabei auch die Kupferphase mittels Plasmaspritzen abgeschieden, wobei die jeweils zugeführte Pulvermischung entsprechende Wolfram- und Kupfer- Anteile enthält. Zwischen Wolfram und dem FGM befindet sich ein dünner metallischer Film, der die Adhäsion fördern soll.

In der US 5 988 488 wird weiters ausgeführt, dass versuchsweise eine Schicht aus einem gemischten Kupfer-Wolfram-Material mittels Löten oder Diffusionsbonden zwischen Wolfram und der Kupfer-Wärmesenke eingebracht wurde. Es ist davon auszugehen, dass sowohl die in der US 5 126 106 und der US 5 988 488 beschriebenen Herstellverfahren zu Verbundbauteilen führen, die eine deutlich verbesserte Beständigkeit gegen thermisch induzierte Risse aufweisen. Nachteilig ist jedoch, dass die darin beschriebenen Verfahrenstechniken aufwendig und damit die so hergestellten Verbundbauteile teuer sind. Zudem beschränken sich aus verfahrenstechnischen Gründen die oben genannten Techniken auf Flachziegelstrukturen; eine Übertragung auf Monoblockgeometrien ist im Allgemeinen aus geometrischen Gründen nicht möglich.

AT 006636 U1 offenbart ein Verbundteil für Fusionsreaktoren, in dem Wolfram- und Kupfer-Bauteile miteinander verbunden sind.

Es ist Aufgabe der gegenständlichen Erfindung, Verbundbauteile bereitzustellen, die zumindest abschnittsweise aus Wolfram oder einer Wolframlegierung und Kupfer oder einer Kupferlegierung bestehen, die eine ausreichende Funktionsfähigkeit, speziell im Hinblick auf thermische Ermüdung aufweisen und eine kostengünstige Herstellung ermöglichen.

Diese Aufgabe wird durch die unabhängigen Ansprüche gelöst.

Der Verbundbauteil umfasst zumindest einen Teil aus Wolfram oder einer Wolframlegierung mit einem W-Gehalt > 90 Gew.% und einen Teil aus Kupfer oder einer Kupferlegierung mit einer Wärmeleitfähigkeit > 250 W/mK. Im weiteren Text sind bei Angabe von Wolfram auch Wolframlegierung mit einem W-Gehalt > 90 Gew.% und bei Angabe von Kupfer auch Kupferlegierung mit einer Wärmeleitfähigkeit > 250 W/mK miteinbezogen.

W-Gehalte ≤ 90 Gew.% führen zu einer nicht ausreichenden thermischen Stabilität bzw. zu einer Herabsetzung der Wärmeleitfähigkeit im Wolfram-Teil. Wenn die Wärmeleitfähigkeit des Kupfers oder der Kupferlegierung ≤ 250 W/mK ist, kann eine ausreichende Wärmeabfuhr nicht mehr gewährleistet werden. Bevor der Wolfram-Teil und der Kupferteil durch einen Fügeprozess formschlüssig verbunden werden, wird der Wolfram-Teil im Bereich seiner Fügefläche strukturiert. Durch diese Strukturierung wird eine deutliche Verbesserung der Verbundfestigkeit, speziell unter zyklischer Belastung, erzielt. Zudem ist die Strukturierung im Vergleich zu weiteren geeigneten Verfahrenstechniken, die zu einer Erhöhung der Verbundfestigkeit führen, deutlich kostengünstiger. Aus zyklischen Belastungstests kann geschlossen werden, dass mit erfindungsgemäßen Verbundbauteilen, die als Erste-Wand-Bauteile in Fusionsreaktoren eingesetzt werden, eine deutliche Standzeitverbesserung erzielt werden kann. Die Erfindung löst damit ein seit vielen Jahren bestehendes Problem.

Unter Strukturierung ist dabei eine Veränderung der Wolframoberfläche in makroskopischer Größenordnung zu verstehen, die zu einer Erhöhung der spezifischen Oberfläche führt. Diese Strukturierung kann in bevorzugter Weise durch ein Strahlverfahren erzielt werden. Wie in den Beispielen näher erläutert, eignet sich dazu besonders das Elektronenstrahlverfahren. Dabei wird der Elektronenstrahl so geführt, dass regelmäßige Vertiefungen und Erhöhungen entstehen. Besonders günstige Eigenschaften lassen sich erzielen, wenn die Vertiefungen eine Tiefe von 100 $\mu$m bis 2mm und die Erhöhungen eine Höhe von 100 $\mu$m bis 2mm aufweisen. Weiters ist es günstig, wenn die Vertiefungen und Erhöhungen kegelförmig ausgebildet sind. Weitere voneinander unabhängige günstige Ausführungen werden dann realisiert, wenn die einzelnen Vertiefungen und Erhöhungen in etwa einheitliche Durchmesser, in etwa einheitliche Tiefen und in etwa einheitliche Abstände aufweisen und mindestens 10 % der Fügefläche strukturiert ist.

Die Strukturierung kann auch durch mechanische Verfahrenstechniken eingebracht werden. Aufgrund der intrinsischen Sprödigkeit von Wolfram eignet sich dabei besonders das Profilschleifen, und hier wiederum das Einbringen von pyramidenförmigen Erhöhungen. Es können jedoch zufrieden stellende Resultate auch durch Drehen oder Fräsen erreicht werden. Weitere voneinander unabhängige günstige Ausführungen werden dann realisiert, wenn die einzelnen Vertiefungen und Erhöhungen in etwa einheitliche Durchmesser, in etwa einheitliche Tiefen und in etwa einheitliche Abstände aufweisen und mindestens 10 % der Fügefläche strukturiert ist.

Als weitere sehr geeignete Verfahrenstechnik sind solche zu nennen, die auf Pulvermetallurgie beruhen. Dabei wird eine Pulvermischung, die mindestens 90 Gew.% Wolfram enthält und eine Korngröße nach Fisher von 0,5 $\mu$m bis 10 $\mu$m aufweist mittels Matrizenpressen mit einem Druck von 100 MPa bis 600 MPa verdichtet. Der Matrizenstempel weist eine strukturierte Oberfläche auf. Anschließend wird der Grünling bei einer Temperatur im Bereich 1400 bis 2700°C in reduzierender Atmosphäre oder Vakuum gesintert wird. Dabei kommen tiefe Temperaturen für feine und hohe Temperaturen für grobe Pulver zum Einsatz. Die erforderliche Sintertemperatur kann der entsprechenden Ashby-Map entnommen werden.

Als besonders vorteilhaft hat sich der Einsatz von Matrizenstempeln mit pyramidenförmigen Vertiefungen mit einer Basislänge von 0,5 bis 2 mm erwiesen.

Als geeignete Wolfram-Werkstoffe sind einkristallines Wolfram, Rein-Wolfram, AKS-(Aluminium-Kaliumsilikat gedoptes) W, UHP (ultra-high-purity)-Wolfram, nanokristallines Wolfram, amorphes Wolfram, ODS (oxide-dispersion-strengthened)-Wolfram, W-Re, ODS-W-Re und Karbid-, Nitrid- oder Boridausscheidungsgehärtete Wolframlegierungen mit einem Karbid-, Nitrid- und/oder Boridanteil bevorzugt zwischen 0,05 und 1 Vol.% zu nennen. Besonders günstige Eigenschaften werden mit W-1 Gew.% $La_2O_3$ erzielt. Eine segmentierte Ausführung der Wolfram- / Wolframlegierungsbereiche ist vorteilhaft.

Als sehr vorteilhaft hat sich weiters erwiesen, wenn der Teil aus Kupfer oder einer Kupferlegierung unter Verwendung von OFHC (oxygen-free-highconductivity) Kupfer durch Aufschmelzen mit dem Wolfram-Teil gefügt wird. Um die Benetzung zwischen Wolfram und Kupfer zu verbessern, kann es günstig sein, ein metallisches Element oder eine Legierung, beispielsweise durch Beschichten des Wolframbereiches einzubringen, das sowohl in Wolfram als auch in Kupfer löslich ist oder mit diesen Werkstoffen eine Reaktion eingeht. Dazu eignen sich Elemente / Legierungen der Eisenmetalle, wie beispielsweise Nickel.

Das stoffschlüssige Verbinden kann auch durch Löten erfolgen. Dabei wird der strukturierte Wolfram-Teil mit einem unstrukturierten oder strukturierten Kupferteil verlötet. Das Lot füllt dabei die Vertiefungen der Strukturierung.

Ein weiteres geeignetes Fügeverfahren ist das Diffusionsschweißen. Dies kann beispielsweise durch heißisostatisches Pressen erfolgen. Dabei wird ein strukturierter Wolframteil mit einem bevorzugt nicht strukturierten Kupferteil in einer Kanne (z.B. aus Stahl) platziert und bei Temperaturen 50 bis 300°C unter der Solidustemperatur des jeweiligen Kupferwerkstoffes bei Drücken von

100 bis 250 MPa gehipt. Dabei fließt Kupfer in die Vertiefungen der Strukturierung und füllt diese vollständig aus.

Die Anwendung des erfindungsgemäßen Verfahrens führt zu Verbundbauteilen mit ausgezeichneten Einsatzeigenschaften, besonders bei zyklischer Beanspruchung. Die erfindungsgemäßen Verbundbauteile eignen sich damit in besonderer Weise als Erste-Wand-Komponente oder Teil einer Erste-Wand-Komponente eines Fusionsreaktors (z.B. Divertor, Baffle). Um die Strukturfestigkeit und -steifigkeit solcher Erste-Wand-Komponenten zu verbessern, wird an den Kupfer Teil ein Strukturteil aus einem metallischen Werkstoff mit einer Festigkeit von größer 300 MPa gefügt. Als besonders vorteilhafte metallische Werkstoffe sind ausscheidungsgehärtete Cu-Cr-Zr, ODS-Cu Werkstoffe und austenitische Stähle zu nennen. Die Auswahl der bestgeeigneten Fügetechnik hängt von der Art der Werkstoffpaarung ab. Kupfer / Kupfer bzw. Kupfer / Stahl Paarungen werden vorteilhafterweise durch Hartlöten oder Diffusionsbonden, wie beispielsweise heißisostatische Pressen verbunden. Für Kupfer / Kupfer Paarungen eignen sich darüber hinaus noch Schmelzschweißverfahren, wie z.B.

Elektronenstrahlschweißen.

Im Folgenden wird die Erfindung durch Beispiele näher erläutert.

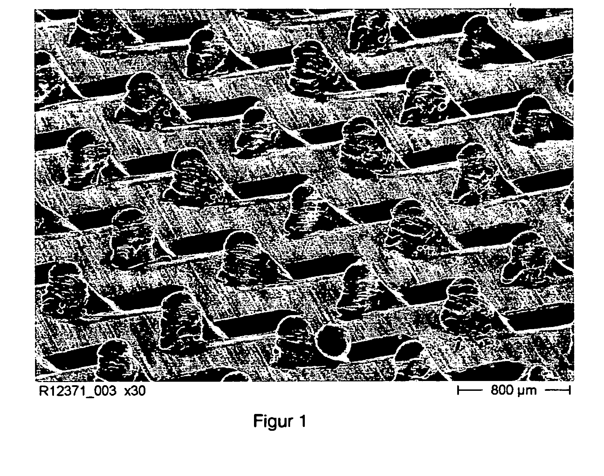

Figur 1 zeigt dabei eine REM Aufnahme eines mittels Elektronenstrahl strukturierten Wolframteils.

Beispiel 1

Die Fügeflächen (25 x 40 mm) von Teilen aus Wolfram mit einer Abmessung von

25 x 40 x 10 mm wurden mittels Profilschleifen strukturiert. Dabei entstanden auf der Wolframoberfläche regelmäßig angeordnete pyramidenförmige Erhebungen. Die Basis der einzelnen Pyramiden wies dabei eine Seitenlänge von 0,8 mm auf. Die Höhe der einzelnen Pyramiden wurde mit 1 mm gewählt. Die Spitze der Pyramiden wies ein quadratisches Plateau mit einer Seitenlänge von 0,2 mm auf. Jede Pyramide wird von einem umlaufenden Steg von 0,2 mm eingefasst, bis die nächste Seitenfläche der Pyramide wieder ansteigt. Derart erhaltene Teile wurden anschließend mit Kupfer hintergossen, wozu eine OFHC-Kupferplatte mit den Abmessungen 25 x 40 x 5 mm unter Vakuum über den Kupferschmelzpunkt erhitzt wurde. Nach Erreichen der Flüssigphase und einer Haltezeit von mehreren Minuten folgte eine Ofenabkühlung. Die so erhaltenen Verbundbauteile, bestehend aus einem Teil aus Wolfram und einem Teil aus OFHC Kupfer, wurden anschließend allseitig bearbeitet.

Dadurch entstanden Verbundbauteile mit den Abmessungen

24,5 x 39,5 x 12,5 mm (Stärke Wolfram: 9,5 mm, Stärke OFHC Kupfer: 3 mm). Diese Verbundbauteile wurden anschließend auf einem Cu-Cr-Zr Strukturteil mit den Abmessungen

39,5 x 73,5 x 30 mm assembliert, wobei die Fläche 39,5 x 73,5 mm die Fügefläche zwischen dem Verbundbauteil und dem Cu-Cr-Zr-Strukturteil darstellt. In dieser Assemblierung wurden der Verbundbauteil und der Cu-Cr-Zr-Strukturteil in eine Stahlkanne eingeschweißt, evakuiert, versiegelt und anschließend bei 900°C / 1000 bar einem HIP Prozess unterzogen. Nach dem HIP Prozess wurde die Stahlkanne mechanisch entfernt, eine Wärmebehandlung (½ h bei 970°C) und anschließend eine Schnellabkühlung mittels Gasabschreckung durchgeführt. Mit der Gasabschreckung wurde eine Kühlrate > 1 °C / s erzielt. Dadurch kann mittels einer abschließenden Auslagerung bei 475°C / 3h eine Aushärtung des Cu-Cr-Zr erreicht werden. Der so erhaltene Verbundkörper wurde abschließend endbearbeitet wodurch eine aktiv kühlbare Erste-Wand-Komponente entstand.

Beispiel 2

Teile aus W-1 %La$_2$O$_3$ mit einer Abmessung von 25 x 40 x 10 mm wurden auf der Fügefläche (25 x 40mm) mittels Elektronenstrahl strukturiert. Dabei entstanden auf der Wolframoberfläche Vertiefungen und Erhöhungen in Form von Erhöhungen, die in Figur 1 wiedergegeben sind.

Zur Herstellung des Kupfer-Teiles und zur Realisierung der Verbindung wurden derart strukturierte Teile aus W-1%La$_2$O$_3$

anschließend mit Kupfer hintergossen, wozu eine OFHC-Kupferplatte mit den Abmessungen

25 x 40 x 5 mm unter Vakuum über den Kupferschmelzpunkt erhitzt wurde. Nach Erreichen der Flüssigphase und einer Haltzeit von mehreren Minuten folgte eine Ofenabkühlung. Die so erhaltenen Verbundbauteile wurden anschließend allseitig bearbeitet

(Abmessungen 24,5 x 39,5 x 12,5 mm; Stärke W-1 %$La_2O_3$: 9,5 mm,

Stärke OFHC Kupfer: 3 mm).

Die Herstellung einer Erste-Wand-Komponente erfolgte gemäß Beispiel 1.

Beispiel 3

Teile aus Wolfram mit einer Abmessung von 35 x 50 x 15 mm wurden an der Fügefläche (35 x 50 mm) mittels Matrizenpressen strukturiert. Dazu wurde reines Wolframpulver mit einer Korngröße nach Fisher von 4,5 $\mu$m verwendet. Der Matrizenstempel war dabei so strukturiert, dass auf der Grünlingsoberfäche regelmäßig angeordnete, pyramidenförmige Erhöhungen mit einer Höhe von 1 mm und einer Seitenlänge von ebenfalls 1 mm entstanden. Die erzielte relative Grünlingsdichte betrug 65%, bei einem Pressdruck von 300 MPa. So erhaltene Grünlinge wurden anschließend einem Sinterprozess bei 2400°C unter Wasserstoff unterzogen, wodurch eine relative Dichte von 95 % erzielt wurde. Anschließend wurden aus den Sinterlingen Teile mit Abmessungen

25 x 40 x 5 mm durch Drahtscheiden herausgearbeitet (Fügefläche: 25 x 40 mm). Derart erhaltene Teile wurden zur Herstellung des Kupfer-Teiles und zur Realisierung der Verbindung mit Kupfer hintergossen, wozu eine OFHC-Kupferplatte mit den Abmessungen

25 x 40 x 5 mm unter Vakuum über den Kupferschmelzpunkt erhitzt wurde. Nach Erreichen der Flüssigphase und einer Haltzeit von mehreren Minuten folgte eine Ofenabkühlung. Die so erhaltenen Verbundbauteile wurden anschließend allseitig bearbeitet.

Die Herstellung einer Erste-Wand-Komponente erfolgte gemäß Beispiel 1.

**Patentansprüche**

1. Verfahren zur Herstellung eines Verbundbauteils, wobei ein Teil aus Wolfram oder einer Wolframlegierung mit einem W-Gehalt > 90 Gew.% mit einem Teil aus Kupfer oder einer Kupferlegierung mit einer Wärmeleitfähigkeit > 250 W/mK durch einen Fügeprozess stoffschlüssig verbunden wird, **dadurch gekennzeichnet,** **dass** der Teil aus Wolfram oder einer Wolframlegierung im Bereich seiner Fügefläche vor dem Fügeprozess zur Erzielung einer größeren Oberfläche durch Einbringen von Vertiefungen und / oder Erhöhungen strukturiert wird, wobei die einzelnen Vertiefungen und / oder Erhöhungen einheitliche Abmessungen und / oder einheitliche Abstände aufweisen.

2. Verfahren nach Anspruch 1, **dadurch gekennzeichnet, dass** mindestens 10 % der Fügefläche Vertiefungen und / oder Erhöhungen aufweisen.

3. Verfahren nach Anspruch 1 oder 2, **dadurch gekennzeichnet, dass** der Teil aus Wolfram oder einer Wolframlegierung durch ein Strahlverfahren strukturiert wird.

4. Verfahren nach Anspruch 3, **dadurch gekennzeichnet, dass** die Strukturierung aus Vertiefungen mit einer Tiefe von 100 $\mu$m bis 2mm und Erhöhungen mit einer Höhe von 100 $\mu$m bis 2 mm besteht.

5. Verfahren nach einem der Ansprüche 3 oder 4, **dadurch gekennzeichnet, dass** die Strukturierung aus kegelförmigen Vertiefungen und kegelförmigen Erhöhungen besteht.

6. Verfahren nach einem der Ansprüche 3 bis 5, **dadurch gekennzeichnet, dass** der Teil aus Wolfram oder einer Wolframlegierung durch einen Elektronenstrahl strukturiert wird.

7. Verfahren nach Anspruch 1 oder 2, **dadurch gekennzeichnet, dass** der Teil aus Wolfram oder einer Wolframlegierung durch mechanische Bearbeitung strukturiert wird.

8. Verfahren nach Anspruch 7, **dadurch gekennzeichnet, dass** der Teil aus Wolfram oder einer Wolframlegierung durch Profilschleifen strukturiert wird.

9. Verfahren nach Anspruch 7 oder 8, **dadurch gekennzeichnet, dass** die Strukturierung aus pyramidenförmigen Erhöhungen besteht.

10. Verfahren nach Anspruch 1 oder 2, **dadurch gekennzeichnet, dass** der Teil aus Wolfram oder einer Wolframlegierung durch eine pulvermetallurgische Verfahrenstechnik strukturiert wird.

11. Verfahren nach Anspruch 10, **dadurch gekennzeichnet, dass** eine Pulvermischung, die mindestens 90 Gew.% Wolfram enthält und eine Korngröße nach Fisher von 0,5 $\mu$m bis 10 $\mu$m aufweist mittels Matrizenpressen mit einem Druck von 100 MPa bis 600 MPa verdichtet wird, wobei der Matrizenstempel eine strukturierte Oberfläche aufweist, und anschließend der Grünling bei einer Temperatur im Bereich 1400 bis 2700°C in reduzierender Atmosphäre oder Vakuum gesintert wird.

12. Verfahren nach Anspruch 11, **dadurch gekennzeichnet, dass** der Matrizenstempel pyramidenförmige Vertiefungen mit einer Basislänge von 0,5 bis 2 mm aufweist.

13. Verfahren nach einem der Ansprüche 1 bis 12, **dadurch gekennzeichnet, dass** die Wolframlegierung W-1Gew. %La$_2$O$_3$ ist.

14. Verfahren nach einem der Ansprüche 1 bis 13, **dadurch gekennzeichnet, dass** der Kupferteil aus OFHC Kupfer besteht.

15. Verfahren nach einem der Ansprüche 1 bis 14, **dadurch gekennzeichnet, dass** das stoffschlüssige Verbinden durch Hintergießen des Teiles aus Wolfram oder einer Wolframlegierung mit Kupfer oder einer Kupferlegierung erfolgt.

16. Verfahren nach einem der Ansprüche 1 bis 14, **dadurch gekennzeichnet, dass** das stoffschlüssige Verbinden durch Verlöten erfolgt.

17. Verfahren nach einem der Ansprüche 1 bis 14, **dadurch gekennzeichnet, dass** das stoffschlüssige Verbinden durch Diffusionsschweißen, bevorzugt durch heißisostatisches Pressen erfolgt.

18. Verfahren nach einem der Ansprüche 1 bis 17, **dadurch gekennzeichnet, dass** der Verbundbauteil als Teil einer Erste-Wand-Komponente eines Fusionsreaktors verwendet wird.

19. Verbundbauteil, wobei dieser einen Teil aus Wolfram oder einer Wolframlegierung mit einem W-Gehalt > 90 Gew. % und einen Teil aus Kupfer oder einer Kupferlegierung mit einer Wärmeleitfähigkeit > 250 W/mK umfasst, die durch einen Fügeprozess stoffschlüssig miteinander verbunden sind,
**dadurch gekennzeichnet,**
**dass** der Teil aus Wolfram oder einer Wolframlegierung im Bereich seiner Fügefläche durch Vertiefungen und / oder Erhöhungen strukturiert ist, wobei die einzelnen Vertiefungen und / oder Erhöhungen einheitliche Abmessungen und / oder einheitliche Abstände aufweisen.

**Claims**

1. Method for producing a composite structural element, wherein a part made of tungsten or a tungsten alloy with a W content > 90 wt.% is integrally connected by a joining process to a part made of copper or a copper alloy with a thermal conductivity > 250 W/mK,
**characterised**
**in that** prior to the joining process the part made of tungsten or a tungsten alloy is structured in the region of its surface to be joined for the purpose of achieving a larger surface area by introducing depressions and/or elevations, said individual depressions and/or elevations exhibiting uniform dimensions and/or uniform spacings.

2. Method according to Claim 1, **characterised in that** at least 10 % of the surface to be joined exhibits depressions and/or elevations.

3. Method according to Claim 1 or 2, **characterised in that** the part made of tungsten or a tungsten alloy is structured by a blasting method.

4. Method according to Claim 3, **characterised in that** the structuring consists of depressions with a depth of 100 $\mu$m to 2 mm and elevations with a height of 100 $\mu$m to 2 mm.

5. Method according to one of Claims 3 or 4, **characterised in that** the structuring consists of conical depressions and conical elevations.

6. Method according to one of Claims 3 to 5, **characterised in that** the part made of tungsten or a tungsten alloy is structured by an electron beam.

7. Method according to Claim 1 or 2, **characterised in that** the part made of tungsten or a tungsten alloy is structured by mechanical working.

8. Method according to Claim 7, **characterised in that** the part made of tungsten or a tungsten alloy is structured by profile grinding.

9. Method according to Claim 7 or 8, **characterised in that** the structuring consists of pyramid-shaped elevations.

10. Method according to Claim 1 or 2, **characterised in that** the part made of tungsten or a tungsten alloy is structured by a powder-metallurgical procedure.

11. Method according to Claim 10, **characterised in that** a powder mixture that contains at least 90 wt.% tungsten and that exhibits a grain size according to Fisher of 0.5 $\mu$m to 10 $\mu$m is densified by means of die pressing with a pressure from 100 MPa to 600 MPa, the die punch exhibiting a structured surface, and subsequently the green body is sintered at a temperature within the range from 1400 °C to 2700 °C in reducing atmosphere or in a vacuum.

12. Method according to Claim 11, **characterised in that** the die punch exhibits pyramid-shaped depressions with a base length of 0.5 mm to 2 mm.

13. Method according to one of Claims 1 to 12, **characterised in that** the tungsten alloy is W-1wt.%La$_2$O$_3$.

14. Method according to one of Claims 1 to 13, **characterised in that** the copper part consists of OFHC copper.

15. Method according to one of Claims 1 to 14, **characterised in that** the integral connecting is effected by back-casting of the part made of tungsten or a tungsten alloy with copper or a copper alloy.

16. Method according to one of Claims 1 to 14, **characterised in that** the integral connecting is effected by soldering.

17. Method according to one of Claims 1 to 14, **characterised in that** the integral connecting is effected by diffusion welding, preferably by hot isostatic pressing.

18. Method according to one of Claims 1 to 17, **characterised in that** the composite structural element is used as part of a first-wall component of a fusion reactor.

19. Composite structural element, said element comprising a part made of tungsten or a tungsten alloy with a W content > 90 wt.% and a part made of copper or a copper alloy with a thermal conductivity > 250 W/mK, said parts being integrally connected to one another by a joining process, **characterised in that** the part made of tungsten or a tungsten alloy is structured by depressions and/or elevations in the region of its surface to be joined, the individual depressions and/or elevations exhibiting uniform dimensions and/or uniform spacings.

**Revendications**

1. Procédé de fabrication d'une pièce composite, dans lequel une pièce de tungstène ou d'alliage de tungstène à teneur en Tg > 90% est assemblée en engagement matériel, par un traitement de raccord par encochage, avec une pièce de cuivre ou d'alliage de cuivre à conductivité thermique > 250 W/mK, **caractérisé en ce que** la pièce de tungstène ou d'alliage de tungstène est structurée dans sa zone de raccord par encochage, avant le traitement de raccord par encochage, en formant des cavités ou des surélévations afin d'atteindre une plus grande surface, dans lequel les cavités ou les surélévations individuelles présentent des dimensions uniformes et/ou des distances uniformes.

2.  Procédé selon la revendication 1, **caractérisé en ce qu'**une proportion d'au moins 10% de la surface de raccord par encochage présente des cavités et/ou des surélévations.

3.  Procédé selon la revendication 1 ou 2, **caractérisé en ce que** la pièce de tungstène ou d'alliage de tungstène est structurée par un procédé de rayonnement.

4.  Procédé selon la revendication 3, **caractérisé en ce que** la structuration consiste en cavités d'une profondeur de 100 $\mu$m à 2 mm et en surélévations d'une hauteur de 100 $\mu$m à 2 mm.

5.  Procédé selon la revendication 3 ou 4, **caractérisé en ce que** la structuration consiste en cavités coniques et en surélévations coniques.

6.  Procédé selon l'une quelconque des revendications 3 à 5, **caractérisé en ce que** la pièce de tungstène ou d'alliage de tungstène est structurée par un procédé de rayonnement électronique.

7.  Procédé selon la revendication 1 ou 2, **caractérisé en ce que** la pièce de tungstène ou d'alliage de tungstène est structurée par un procédé d'usinage mécanique.

8.  Procédé selon la revendication 7, **caractérisé en ce que** la pièce de tungstène ou d'alliage de tungstène est structurées par un procédé de rectification de profils.

9.  Procédé selon la revendication 7 ou 8, **caractérisé en ce que** la structuration consiste en surélévations pyramidales.

10.  Procédé selon la revendication 1 ou 2, **caractérisé en ce que** la pièce de tungstène ou d'alliage de tungstène est structurée par une technologie de métallurgie des poudres.

11.  Procédé selon la revendication 10, **caractérisé en ce qu'**un mélange de poudres d'une teneur en poids d'au moins 90% de tungstène et d'une granulométrie Fisher de 0,5 $\mu$m à 10 %m est comprimé par matriçage sous une pression de 100 MPa à 600 MPa par un poinçon de matriçage à surface structurée, et **en ce que** le comprimé cru est ensuite fritté à une température comprise dans la plage de 1.400 à 2.700°C sous atmosphère réductrice ou sous vide.

12.  Procédé selon la revendication 11, **caractérisé en ce que** le poinçon de matrice présente des cavités pyramidales d'une longueur de base de 0,5 à 2 mm.

13.  Procédé selon la revendication 1 ou 2, **caractérisé en ce que** l'alliage de tungstène est l'alliage de Tg à 1 % en poids de $La_2O_3$.

14.  Procédé selon l'une quelconque des revendications précédentes, **caractérisé en ce que** la pièce de cuivre est en cuivre OFHC.

15.  Procédé selon l'une quelconque des revendications précédentes, **caractérisé en ce que** l'assemblage en engagement matériel est effectué par coulée, en remplissage, du cuivre ou de l'alliage de cuivre sur la pièce de tungstène ou d'alliage de tungstène.

16.  Procédé selon l'une quelconque des revendications 1 à 14, **caractérisé en ce que** l'assemblage en engagement matériel est effectué par brasage.

17.  Procédé selon l'une quelconque des revendications 1 à 14, **caractérisé en ce que** l'assemblage en engagement matériel est effectué par soudage par diffusion, de préférence par compression isostatique à chaud.

18.  Procédé selon l'une quelconque des revendications précédentes, **caractérisé en ce que** la pièce composite est utilisée comme pièce d'un composant de première paroi d'un réacteur à fusion.

19.  Pièce composite comprenant une pièce de tungstène ou d'alliage de tungstène à teneur en Tg > 90% et une pièce de cuivre ou d'alliage de cuivre d'une conductivité thermique > 250 W/mK, qui sont assemblées l'une avec l'autre en engagement matériel,

**caractérisée en ce que** la pièce de tungstène ou d'alliage de tungstène est structurée par des cavités et/ou des surélévations dans sa zone de raccord par encochage, d'une manière telle que les cavités et/ou lés surélévations individuelles présentent des dimensions uniformes et/ou des distances uniformes.

R12371_003 x30          ⊢— 800 µm —⊣

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5126106 A
- US 5988488 A
- AT 006636 U1